# EUROPÄISCHE PATENTANMELDUNG

(11) **EP 1 045 600 A1**
(43) Veröffentlichungstag der Anmeldung: **18.10.2000**
(21) Anmeldenummer: 99107595.3
(22) Anmeldetag: 16.04.1999
(51) Int. Cl.: H04Q 7/32

(54) **Mobilstation und Speicherkarte für dieselbe**

(71) Anmelder: ROBERT BOSCH GMBH, 70442 Stuttgart (DE)
(72) Erfinder: Rysgaard,Bent, 9220 Aalborg (DK); Havmoller,Leo, 9400 Norresundby (DK)

(57) **Abstract**

The invention relates to a mobile station and memory card for the mobile station. The mobile station and a fixed network exchange data in the form of data packages. The memory card contains information about how the data packages should be handled. The mobile station request from the fixed network (3, 6) quality parameters for the handling of the data packages based on information received from said memory card (200).

## Beschreibung

### State of the art

The invention relates to a mobile station and a memory card according to the generic features of the independent patent claims. The GSM-System has the possibility to exchange data packages between the mobile station and the base station (GPRS: general package data radio system). For the processing of the data packages the system contains a quality of service profile (QoS profile) that determines how the data packages are handled compared to other data packages.

### Advantage of the invention

The mobile station and the memory card according to the features of the independent patent claims have the advantage that the negotiation of the quality of service profile (QoS profile) between the mobile station and the fixed network can be minimized or optimized. The data traffic between the mobile station 1 and the base station 3 over the air interface 100 is therefor improved and the system performance can be enhanced.
Useful improvements of the invention derive from the features of the dependent patent claims. The memory card 200 stores either different sets of QoS parameters, specific methods or algorithms to negotiate the QoS profile or parameters for negotiation algorithms. The information can be derived very easily from previous connections. Further the information can be prestored in the memory card either by a user, a network operator or by suppliers of data stations.

### Drawings

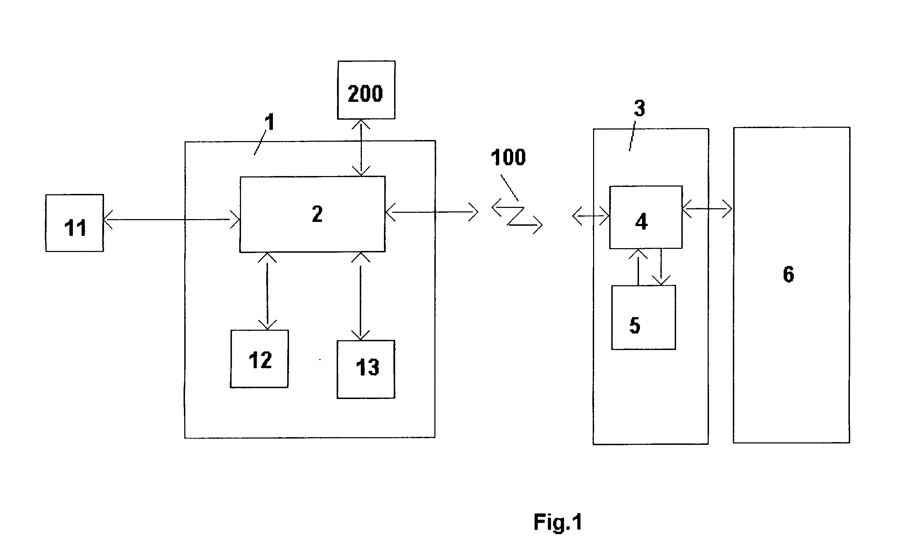

The invention is shown in the drawing and described in detail in the description. Figure 1 shows a communication network comprising a mobile station.

### Description

Figure 1 shows a communication system comprising a mobile station, 1, and a base station, 3. The mobile station, 1, and the base station, 3, are capable of exchanging data over a wireless "air interface", 100. The mobile station, 1, comprises a processing unit, 2, capable of processing data from or for different data station 11, 12 or 13, and exchanging the data via the air interface, 100, with the base station, 3. The processing unit, 2, is also capable to receive data from the base station 3 and supplies those data to the data stations 11, 12, 13. The base station 3 also comprises a processing unit 4, that processes the data exchanged over the air interface 100 and send or receive those data to or from the connected network 6 capable of handling data packages in some manner. The base station 3 further contains a memory 5 capable to exchange information with the processing unit 4. This memory 5 is used for storing control information that is related to the processing of data by the processing unit 4.

The processing unit 2 also has access to a memory card 200, that is capable to store data. A memory card 200 is known from the GSM-System where it is called a SIM-card (subscriber Identification Module) where it used to store authentication information of a subscriber, so that the network can determine if a user of the telephone system is a valid subscription or not. The memory card or the SIM-card can also be used to store more useful information for the user. The memory card can be separated from the mobile and can be used together with other Mobil stations, so that the user can take his personal profile with him if he uses different mobile telephones.

The invention is related to the exchange of data between the mobile station 1 and the base station 3 in the form of data packages, in the GSM/UMTS system called general packet radio service, GPRS. In this mode of operation large blocks of information are subdivided in smaller packages and the information is then send over the air interface 100 in small data packages. The advantage for the system is that data packages are much more easy to handle than a continuous stream of data. The transport network has a possibility to smooth situations where high traffic occurs and delay some of the data packages. The delayed data packages are send at a later point in time when the demand on the network is not that high.

Some of the data packages are more important than other packages or there are other reasons why data packages should be handled different from other data packages. Therefor the whole system comprising the mobile station 1, base station 3 and the network 6 contain information about how the data packages send from or send to a certain data station 11, 12, 13 should be handled. The GPRS-Network stores therefore information called QoS (quality of service) that contains information on how data packages from or to a specific address should be handled. This information is stored in a QoS profile containing data related to the precedence, reliability, delay and the user data throughput.

For the parameter precedence in GPRS there are three different priority classes (high, normal, low) and the data packages with high precedence will be transported ahead of other precedence levels, the data packages with normal precedence will be transported ahead of the data packages with low priority and the data packages with low precedence will only be transported if there are no high or normal priority data packages pending.

Related to reliability in GPRS there are also three different reliability classes and within each reliability class there are probabilities assigned that a data package gets lost, duplicated, the sequence of the data packages is disturbed, or that the content of the data packages are delivered with an undetected error.

The parameter delay is related to the maximum time needed for the transport from the sender to the receiver of any data package.

The parameter throughput has two sub parameters and in this sub parameters the maximum possible data rate and a mean data rate are defined.

For the further description it will be assumed that the data station 11 is a computer that is used as an internet access, data station 12 is an e-mail system and data station 13 is a video data systems that is capable to send or receive video data. As an example the data station 11 is located outside the mobile station 1 whereas the data stations 12 and 13 are incorporated in the mobile station 1. It is also possible that all these components are integrated in the mobile station 1 or that they are located outside the mobile station and that the mobile station is simply used as an interface.

The mobile station 1 comprises a data processing units 2 that is capable to request a certain QoS profile from the base station 3 and the network 6.

As the network 6 or the base station 3 receive a request for a certain QoS profile from the mobile station a negotiation between the network and the mobile station starts to determine the actual QoS profile for that communication. Dependent of which data station, 11, 12 or 13, is used to communicate with the network 6 it is useful to use a different QoS profile. For the e-mail a system 12 it is of advantage to request a QoS having very high reliability. The delay or data rate is not so important. For the video data system 13 a QoS profile involving a low delay and sufficient data rate is a requirement for the operation of the video application. Errors in the transmission of video data is less important.

To select a good QoS profile it is possible that the mobile station requests the QoS profile to be set by the user before the negotiation with a network 6 which QoS profile should be requested. For the user this is very inconvenient, because he has to know an appropriate QoS profile and he has to enter this information separately for every application, every time the subscription is changed, every time a new network is used, maybe because of geographical changes as well or because the mobile is exchanged to a new model/brand/type. Therefor the invention uses a memory card for storing information that enables the mobile station to negotiate automatically a QoS profile with the network.

The information stored in the memory card could comprise different sets of QoS parameters, that are useful for the different data stations 11, 12 or 13. Based on the data station 11, 12 or 13 for which the mobile station 1 requests a QoS profile, the mobile station uses different sets of QoS parameter. The information on the memory card can also contain an algorithm or programs or parameters for the same running in the processing unit 2 for the negotiation of the QoS parameters. That would introduce an advantage of greater flexibility of the QoS profile especially if the mobile station is establishing a connection for the first time between a data station and the fixed network, have different applications running in parallel, wants his connection not to exceed a certain price at any time pr. time/unit, etc.

The information can be stored in the memory card in various ways. One possibility to store the information and the memory card is based on preceding connections between data stations and the fixed network. If for example a special QoS profile for the connection between the e-mail system 12 and the fixed network 6 was negotiated based on requests of the user or by restrictions from the network 6 then this QoS profile is stored in the memory card 200 at the end of the connection. When the next connection between the e-mail system 12 and the fixed network 6 is established the processing unit 2 uses this QoS profile as an initial value for the negotiation with the base station 3 or the fixed network 6.

A further possibility of storing the information in the memory card 200 is to allow the user to store this information in advance in the memory card 200. A further possibility of storage information in the memory card 200 is that the QoS profiles or an algorithem for specific applications is stored on the memory card by the supplier of the memory card 200. In general this will be a network operator who operates the network 6. By doing so the network operator has a possibility to restrict the requested QoS profiles to the capability of the network 6 and to ensure that no connection establishment is unsuccessful due to unrealistic user requests. The network operator can thereby minimize the negotiation between the mobile station 1 and the network 6 so that the air interface 100 is relieved from unnecessary traffic due to unsuccessful negotiation processes.

Further the suppliers of the applications or data stations 11, 12 or 13 can supply preset QoS profiles for the specific application that are then stored in the memory card 200 on the initialization of a specific data station with the mobile station 1. This gives the network operators or the suppliers of the data station the possibility of "Plug and Play" applications or subscriptions, so that the user has no need to know appropriate QoS parameters for using the system.

It is also possible that all these different methods of supplying the information on the memory card 200 are used simultaneously. For a user who has no interest in the system the prestored parameters can be used. More advanced users can select their own QoS profile for a specific application.

Further there is the possibility to store different sets of QoS profiles on the memory card 200. The different QoS profiles are typical sets of QoS parameters that has to be turned out to be useful for typical applications like E-Mail or Internet browsing with a computer. It is then possible that the network 6 requests such a typical profile in the process of negotiation. This allows to negotiate this specific profile very quickly without the need of long data telegrams between the mobile station 1 and the network 6.

It is also possible that a session evolves during its lifetime, i.e. the user increase or decrease the demands set on a certain QoS parameter. Here, an analysis algorithm of the traffic controlled by SIM parameters could dynamically set the QoS dependent on the demand.

## Claims

1. Mobile station (1) capable to exchange data via an air interface (100) between different data stations (11, 12, 13) and a fixed network (3, 6), said data been arranged in data packages, the mobile station (1) comprising a processing unit (2), processing said data, said processing unit (2) capable to exchange information with a memory card (200), characterized by, said processing unit (2) requesting from the fixed network (3, 6) quality parameters for the handling of the data packages based on information received from said memory card (200).

2. Mobile station according to claim 1, characterized by, that said information contains a set of quality parameters stored in the memory card (200) for the handling of the data packages.

3. Mobile station according to claim 1, characterized by, that said information contains an algorithm for the negotiation of quality parameters for the handling of the data packages between the mobile station and the fixed network (3, 6).

4. Mobile station according to claim 1, characterized by, that said information contains parameters for an algorithm running in the processing unit (2) for setting the quality parameters for the handling of the data packages between the mobile station and the fixed network (3, 6) on a dynamic basis.

5. Mobile station according to claim 2 to 4, characterized by, that the information was stored in the memory card (200) on a preceding exchange of data via the air interface (100) between the mobile stations (1) and the fixed network (3, 6).

6. Mobile station according to claim 2 to 4, characterized by, that the information was stored in the memory card (200) by a supplier of the memory card (200).

7. Mobile station according to claim 2 to 4, characterized by, that the information was stored in the memory card (200) by a user of the mobile station.

8. Mobile station according to claim 2 to 4, characterized by, that the information was stored in the memory card (200) by a data station (11, 12, 13), said data station (11, 12, 13) exchanging data via the mobile station (1).

9. Memory card (200) for a mobile station (1), said mobile station being capable to exchange data via an air interface (100) between different data stations (11, 12, 13) and a fixed network (3, 6), said data been arranged in data packages, the mobile station (1) comprising a processing unit (2), processing said data, the memory card (200) comprising information for the processing unit (2),
characterized by, said processing unit (2) requesting from the fixed network (3, 6) quality parameters for the handling of the data packages based on information received from the memory card (200).
